# EUROPÄISCHE PATENTSCHRIFT

(11) **EP 2 471 409 B1**
(45) Veröffentlichungstag und Bekanntmachung des Hinweises auf die Patenterteilung: **26.02.2014**
(21) Anmeldenummer: 11192841.2
(22) Anmeldetag: 09.12.2011
(51) Int. Cl.: A46B 9/02

(54) **Applikatoreinrichtung, insbesondere für einen Kosmetikapplikator**
Applicator facility, in particular for a cosmetic applicator
Dispositif applicateur, notamment pour un applicateur cosmétique

(30) Priorität: 30.12.2010 DE 202010017160 U
(43) Veröffentlichungstag der Anmeldung: 04.07.2012
(73) Patentinhaber: GEKA GmbH, 91572 Bechhofen (DE)
(72) Erfinder: Kulik, Daniela, 04277 Leipzig (DE); Pillipp, Christine, 90451 Nürnberg (DE)
(74) Vertreter: Misselhorn, Hein-Martin

(56) Entgegenhaltungen:
- EP-A1- 1 459 647
- US-A- 6 073 634
- US-A1- 2001 037 815
- US-B1- 6 412 496
- US-B1- 6 539 950

## Beschreibung

Die Erfindung betrifft eine Applikatoreinrichtung nach dem Oberbegriff des Anspruchs 1, einen Applikator aufweisend die Applikatoreinrichtung sowie eine Applikationseinheit aufweisend die Applikatoreinrichtung.

Aus der WO 97/28719 ist ein Applikator nach dem Oberbegriff des Anspruchs 1 bekannt. Ein solcher Applikator weist einen Träger auf, von dem sich Auftragsorgane weg erstrecken. Diese Auftragsorgane besitzen einen gekrümmten Verlauf, wobei die Krümmung zum freien Ende der Auftragsorgane hin zunimmt, d. h. der zugehörige Krümmungsradius zum freien Ende der Auftragsorgane hin kleiner wird. Mittellängsachsen der Auftragsorgane gemäß der WO 97/28719 liegen durchweg in einer Ebene senkrecht zu einer Längserstreckung des Trägers der Auftragsorgane. Auftragsorgane sind bezüglich des Trägers nach Art von Zinken, kammähnlich angeordnet. Ein derartiger Applikator eignet sich für den Fall des Einsatzes als Mascaraapplikator aufgrund seiner kammartigen Ausgestaltung zum Separieren von Wimpern. Jedoch ist aufgrund der geringen Anzahl von Auftragsorganen ein befriedigendes Auftragsergebnis von Mascaramasse auf den Wimpern der Anwenderin wohl eher nicht zu erwarten, da ein derartiger Mascaraapplikator zu wenig Mascaramasse speichern kann, die nach dem Herausziehen des Applikators aus dem Mascarabehälter für das Auftragen auf die Wimpern zur Verfügung steht.

US 2001/0037815 A1 offenbart einen Applikator nach dem ersten Teil von Anspruch 1.

US 6 539 950 B1 offenbart einen Applikator mit gekrümmten Auftragsorganenpaaren.

Demgegenüber ist es Aufgabe der Erfindung, zum einen eine Vielzahl von möglichen Applikatoreinrichtungen anzugeben, die eine hohe Speicherfähigkeit von Medium, insbesondere von Mascaramasse besitzen. Eine weitere Aufgabe der Erfindung ist es, eine Vielzahl möglicher Applikatoreinrichtungen, insbesondere Mascaraapplikatoreinrichtungen anzugeben, die eine auffallende optische Gestaltung aufweisen und sich somit vom optischen Erscheinungsbild bekannter Applikatoreinrichtungen deutlich und spektakulär unterscheiden. Des Weiteren ist es Aufgabe der Erfindung solche Mascaraapplikatoren anzugeben, die zudem die Möglichkeit eröffnen, ein besonders vollständiges Rundumbenetzungsverhalten von Wimpern der Bedienerin mit Mascaramasse zu ermöglichen. In besonderer Art und Weise sollen die Mascaraapplikatoren derart ausgebildet sein, dass sie mittels Urformverfahren, z. B. mittels Kunststoffspritzgussverfahren herstellbar sind.

Diese Aufgaben werden mit einer erfindungsgemäßen Applikatoreinrichtung mit den Merkmalen des Anspruchs 1 gelöst.

Eine erfindungsgemäße Applikatoreinrichtung besitzt einen Träger für einen Auftragsorganbesatz, der aus einer Vielzahl von Auftragsorganen besteht, wobei zumindest ein Auftragsorgan entlang einer Längserstreckung des Auftragorgans zumindest einen trägernäheren ersten Abschnitt und zumindest einen weiter vom Träger entfernt liegenden zweiten Abschnitt besitzt, wobei zumindest ein Abschnitt des Auftragsorgans eine gekrümmt verlaufende Mittellängsachse hat. Eine derartige Applikatoreinrichtung ist derart weitergebildet, dass sich die Mittellängsachsen des ersten und zweiten Abschnitts des Auftragorgans in einer Übergangszone vom ersten zum zweiten Abschnitt des Auftragorgans in zumindest einer Projektion auf einer Schnittebene E durch das Auftragsorgan einen Knick bildend treffen.

Die Schnittebene E durch das Auftragsorgan ist dabei bevorzugt parallel zu einer Längsachse des Trägers angeordnet oder enthält diese.

Das Vorsehen eines Knickes entlang der Längserstreckung von Auftragsorganen bietet eine Vielzahl optisch spektakulärer Ausgestaltungsmöglichkeiten der Auftragsorgane, so dass die gesamte Applikatoreinrichtung optisch auffallend ist, insbesondere wenn sie einer Anwenderin z. B. in Form einer blisterverpackung deutlich sichtbar präsentiert wird. Erfindungsgemäß ist ein Auftragsorgan einer erfindungsgemäßen Applikatoreinrichtung entlang seiner Längserstreckung in unterschiedliche und voneinander unterscheidbare Abschnitte gegliedert, wobei die Abschnitte jeweils in Übergangszonen Ü aneinander liegen und ineinander übergehen. Innerhalb der Übergangszonen Ü bilden Mittellängsachsen M1, M2 der Abschnitte der Auftragsorgane zueinander jeweils einen Knick K.

Ein Knick K im Sinne der Erfindung unterscheidet sich von einer bloßen Wellung oder Biegung, wie sie für Auftragsorgane, beispielsweise für gewellte Borsten bereits bekannt ist, dadurch, dass die Mittellängsachsen M1, M2 oder deren übergangszonenseitigen Endtangenten aneinandergrenzender Abschnitte der Auftragsorgane zueinander einen Winkel α einschließen und so scharfkantig oder bis zu einem gewissen Maximalmaß aufeinander treffen. Als Knick im Sinne der Erfindung gilt weiterhin auch ein verrundetes Aufeinandertreffen zweier solcher Mittellängsachsen M1, M2 oder Endtangenten T_{Ü10}, T_{Ü20}, wobei hierbei ein maximaler Rundungsradius R möglich ist, der kleiner oder gleich eines Durchmessers D des Auftragorgans innerhalb der Übergangszone Ü, in der der Knick liegt oder ausgebildet ist, ist. Im Falle eines scharfkantigen Aufeinandertreffens zweier solcher Mittellängsachsen M1, M2 von Abschnitten der Auftragorgane ist die Übergangszone Ü ein gemeinsamer Punkt der Mittellängsachsen in dem diese aufeinandertreffen. Im Falle eines, wie oben beschrieben verrundeten Übergangs zwischen den Mittellängsachsen ist der Verrundungsbereich mit dem Verrundungsradius 0<r≤d als Übergangszone zwischen den Abschnitten der Auftragsorgane zu verstehen.

Die Schnittebene E, welche wie beschrieben entweder die Längsachse des Trägers enthält oder parallel zu dieser angeordnet ist, ist dabei bevorzugt eine Trennebene eines Formwerkzeuges, beispielsweise eines Spritzgusswerkzeuges. Die Auftragsorgane gemäß der Erfindung weisen in zumindest einer Projektion in dieser Schnittebene E einen Knick auf.

Obwohl in der oben genannten Beschreibung das Maß für den Durchmesser "D" genauer definiert ist, ist der Querschnitt der Auftragsorgane selbstverständlich nicht nur auf einen zylindrischen Querschnitt mit einem Durchmessermaß im Wortsinne beschränkt. Vielmehr können auch andere Querschnittsprofile der Auftragsorgane verwirklicht werden. In einem solchen Fall gilt als Durchmesser D immer diejenige längste Strecke in einem Querschnitt senkrecht zur Mittellängsachse des Auftragsorgans, die sich vom Durchstoßpunkt der Mittellängsachse durch die Schnittebene bis zum weitest möglich vom Durchstoßpunkt entfernten Punkt der Außenseite des Auftragsorgans vom Durchstoßpunkt ergibt.

Beispielsweise ist bei einem Querschnitt des Auftragsorgans in einer Schnittebene senkrecht zur Mittellängsachse des Auftragsorgans im Form eines gleichseitigen Dreieckes, das maximal zulässige Maß für den Rundungsradius R der Abstand vom Durchstoßpunkt der Mittellängsachse durch die Schnittebene bis zu einer Spitze des gleichseitigen Dreiecks. Entsprechendes gilt beispielsweise bei einem ovalen oder anderweitig polygonen Querschnitt der Auftragsorgane. Der maximal zulässige Krümmungsradius R ergibt sich dabei immer aus dem maximalen Abstand zwischen der Mittellängsachse des jeweiligen Schnittes und dem weitest entfernten Punkt des Umrisses des Auftragsorgans in der Schnittebene.

Eine solche mit einem Knick versehene Ausgestaltung der Auftragsorgane eröffnet eine Vielzahl möglicher Ausgestaltungen der Auftragsorgane, was zu einer Vielzahl neuer und optisch auffälligerer Ausgestaltungen der gesamten Applikatoreinrichtung und/oder des gesamten Applikators führt.

So ist es z. B. möglich, die Mittellängsachse des anderen Abschnitts des Auftragorgans gerade oder ebenfalls gekrümmt auszubilden.

Besondere optische Effekte lassen sich erzielen, wenn der erste (trägernähere) Abschnitt eine gekrümmte Mittellängsachse und der zweite (trägerfernere) Abschnitt eine gerade Mittellängsachse aufweist.

Andersartige optische Eindrücke lassen sich erzielen, wenn der erste Abschnitt des Auftragorgans eine gerade verlaufende Mittellängsachse und der zweite Abschnitt eine gekrümmt verlaufende Mittellängsachse besitzt, welche sich in der Übergangszone Ü unter dem Winkel α treffen.

Eine weitere alternative Ausgestaltung besteht darin, dass beide Abschnitte eine gekrümmt verlaufende Mittellängsachse M1, M2 aufweisen, deren Endtangenten T_{Ü10}, T_{Ü20} sich in der Übergangszone Ü unter dem Winkel α treffen.

Für den Winkel α haben sich Werte zwischen 30° und 170°, insbesondere zwischen 45° und 120°, besonders bevorzugt Werte zwischen 60° und 90° als positiv herausgestellt.

Wie bereits erwähnt kann der Knick K einen Rundungsradius R aufweisen, wobei der Rundungsradius R im Bereich zwischen 0≤r≤D, bevorzugt zwischen 0<r≤0,5D, besonders bevorzugt zwischen 0<r≤0,4D liegt und D ein Durchmesser des Auftragsorgans 3 in der Übergangszone Ü ist. Bei dieser Bemessung des maximalen Rundungsradiuses R des Knickes K ist sichergestellt, dass eine Außenoberfläche des Auftragorgans optisch einen Knick K aufweist.

Bevorzugte Ausgestaltungen ergeben sich, wenn die die Mittellängsachse des zweiten Abschnitts im Bereich eines freien Endes des Auftragsorgans einen Winkel γ mit der Längsachse L der Applikatoreinrichtung einschließt, wobei für den Wert des Winkels 0≤γ≤90°, insbesondere 15°≤γ≤75°, besonders bevorzugt 30°≤γ≤60° gilt.

Der erste, trägernähere Abschnitt des Auftragsorgans besitzt eine Höhe h1 und das gesamte Auftragsorgan besitzt eine Höhe h, wobei das Verhältnis h1:h bevorzugt im Bereich zwischen 0,1 und 0,9, insbesondere im Bereich zwischen 0,4 und 0,8, besonders bevorzugt im Bereich zwischen 0,3 und 0,6 liegt. Hierdurch ist gewährleitstet, dass bei der Betrachtung einer derartigen Ausführungsform der erfindungsgemäßen Applikatoreinrichtung die einzelnen Abschnitte (erster Abschnitt und zweiter Abschnitt) klar voneinander unterscheidbar sind.

Zur Erreichung weiterer optisch ansprechender Ausgestaltungen der erfindungsgemäßen Applikatoreinrichtung kann es sinnvoll sein, die Krümmungen der Mittellängsachsen des ersten und des zweiten Abschnitts gleichartig auszubilden. Dies bedeutet, dass die Krümmungen vorzeichengleich und betragsmäßig gleich oder vorzeichengleich und betragsmäßig unterschiedlich sein können.

Gleichwohl ist es aber auch möglich, die Krümmungen der Mittellängsachsen der ersten und zweiten Abschnitte 10, 20 entgegengesetzt auszubilden, d. h. dass die Krümmungen der beiden Abschnitte unterschiedliche Vorzeichen und gg. betragsgleiche oder betragsmäßig unterschiedliche Krümmungen besitzen. In der grafischen Ausgestaltung in den Figuren bedeutet dies, dass - in einer Schnittebene E gesehen - der oder die Krümmungsmittelpunkt(e) des einen Abschnitts auf der einen Seite des Auftragsorgans und der Krümmungsmittelpunkt KR oder die Krümmungsmittelpunkte des anderen Abschnitts auf einer anderen Seite des Auftragorgans zu liegen kommen.

Gemäß einer besonderen Ausführungsform schließt die Mittellängsachse des ersten Abschnitts oder eine Tangente T_{F} am Fußpunkt der Mittellängsachse M1 des ersten Abschnitts mit einer Längsachse L der Applikatoreinrichtung einen Winkel β ein, wobei der Winkel β im Bereich zwischen 30° und 90°, besonders bevorzugt im Bereich zwischen 45° und 60° liegt. Diese Maßnahme ermöglicht es, zum einen optisch senkrecht vom Träger abgehende Auftragsorgane zu gestalten, wie auch optisch schiefwinklig zum Träger angeordnete Auftragsorgane zu verwirklichen. Die Auftragsorgane können dabei selbstverständlich zu einem freien (distalen) Ende der Applikatoreinrichtung hin geneigt als auch beispielsweise zu einer Handhabungseinrichtung, wie z. B. einem Griffstück der Applikatoreinrichtung hin geneigt angeordnet sein.

In einer besonderen Ausführungsform der Erfindung ist der erste Abschnitt der Auftragsorgane aus einem ersten Kunststoffmaterial, insbesondere aus dem Kunststoffmaterial des Trägers ausgebildet, wohingegen der zweite Abschnitt aus einem zweiten, vom ersten Kunststoffmaterial unterschiedlichen Kunststoffmaterial hergestellt ist.

In einer besonderen Ausführungsform ist das zweite Kunststoffmaterial gegenüber dem ersten Kunststoffmaterial weicher ausgebildet.

Die erfindungsgemäße Applikatoreinrichtung ist zweckmäßigerweise derart ausgebildet, dass sie mittels eines Urformverfahrens leicht herzustellen ist, wobei hierfür grundsätzlich die in der DIN 8580 definierten Urformverfahren in Frage kommen, jedoch besonderes Gewicht hierbei auf das Kunststoffspritzgussverfahren wie auch auf 3D-Druckverfahren gelegt ist.

In der Erfindung sind die Auftragsorgane entlang der Längsache L in Reihen R1, R2, R3, ..., Rₙ angeordnet, wobei benachbarte Auftragsorgane einer Reihe R1, R2, R3, ..., Rₙ zueinander einen Abstand d aufweisen. Der kleinste Abstand von Auftragsorganen benachbarter Reihen R1, R2, R3, ..., Rₙ beträgt in Längsrichtung L gesehen dabei bevorzugt d'≤0,5d der Applikatoreinrichtung. Im Falle von d'=0,5d sind also die Auftragsorgane der einen Reihe R1 in Längsrichtung gesehen jeweils mittig zwischen korrespondierenden Auftragsorganen benachbarter Reihen angeordnet. Wenn d'<0,5d ist, existieren zueinander nächstliegende Auftragsorgane benachbarter Reihen, wobei diese Auftragsorgane jeweils Auftragsorganpaare A1 bilden und sich die Auftragsorgane des Auftragsorganpaares A1 in einer Seitenansicht senkrecht auf die Längsachse L zumindest teilweise berühren können, sich überlappen können oder einen geringen Abstand a aufweisen können, wobei 0 mm<a≤0,8 mm, insbesondere 0 mm<a≤0,3 mm gilt.

Erfindungsgemäß sind Auftragsorgane benachbarter Reihen R₁, R₂, R₃, ..., Rₙ hinsichtlich der Richtung, in die die freien Enden der Auftragsorgane bezüglich der Applikatoreinrichtung weisen, entgegengesetzt angeordnet. Hierdurch entsteht eine Klammer, die besonders dafür geeignet ist, Wimpern zwischen sich zu fassen und somit für eine gute Rundumbenetzung von Wimpern zu sorgen, und ein Formen der Wimpern zu gewährleisten.

In einer besonderen Ausführungsform der Erfindung liegen die Mittellängsachsen M1, M2 des ersten und des zweiten Abschnitts in einer Ebene E' oder spannen diese Ebene auf. Gemäß einer besonderen Ausführungsform gilt, dass die Ebene E' parallel oder um einen Winkel δ abgewinkelt zur Längsachse L der Applikatoreinrichtung angeordnet ist, wobei nach derzeitigem Kenntnisstand Winkel zwischen 0°≤δ≤10° noch gut in Kunststoffspritzgussverfahren herstellbar sind. Mittellängsachsen unterschiedlicher Auftragsorgane können dabei jeweils unterschiedliche Ebenen E' aufspannen oder in dieser jeweiligen Ebene E' liegen.

Sofern die Mittellängsachsen der Abschnitte in den Ebenen E' liegen und die Ebene E' einen winkelmäßigen Versatz zur Längsachse L der Applikatoreinrichtung besitzt, ist eine Projektion in die Schnittebene E, welche parallel zur Längsachse L ausgerichtet ist oder diese enthält, diejenige Schnittebene E, in der der erfindungsgemäße Knick K eines Auftragsorgans messbar oder vorhanden sein muss.

Gemäß einer weiteren Ausführungsform liegen alle Mittellängsachsen aller Auftragsorgane einer Reihe R1, R2, R3, ..., Rₙ in der Ebene E' bzw. in der Schnittebene E.

Weitere vorteilhafte Ausführungsformen sind in weiteren Unteransprüchen angegeben. So können sich z. B. die Auftragsorgane zu ihrem freien Ende hin verjüngen. Die Höhe h der Auftragsorgane kann zum distalen Ende der Applikatoreinrichtung hin abnehmen. Das Verhältnis h1:h kann für alle Auftragsorgane einer Applikatoreinrichtung konstant sein oder zum distalen Ende hin abnehmen.

Des Weiteren kann das Verhältnis h1:h über die Längserstreckung der Applikatoreinrichtung entlang der Längsachse L variieren, so dass ein oder mehrere Auftragsorgane mit einem ersten Verhältnis h1:h und ein oder mehrere Auftragsorgane mit einem oder mehreren hiervon abweichenden anderen Verhältnissen h1:h vorhanden sind.

Zur Erreichung bestimmter optischer Effekte oder auch zur Erreichung bestimmter charakteristischer Eigenschaften hinsichtlich der Speicherfähigkeit von Mascara oder dem Auftragsverhalten von Mascara auf Wimpern können erfindungsgemäße Applikatoren weitere Auftragsorgane anderen Typs besitzen, welche beispielsweise als spitzkegelige oder zylindrische Borsten und/oder Scheiben und/oder Rillen und/oder Scheibensegmente und/oder Zahnsegmente und/oder Zähne und/oder Zinken oder dergleichen ausgebildet sind. Derartige Auftragsorgane können bereichsweise über die Applikatoreinrichtung verteilt angeordnet sein. Dies bedeutet, dass jeweils z. B. ein Bereich mit erfindungsgemäß knickbehafteten Auftragsorganen und andere Bereiche des Auftragorganbesatzes mit anderen Auftragsorganen vorhanden sind.

Es allerdings auch möglich, dass knickbehaftete Auftragsorgane regelmäßig oder unregelmäßig zwischen oder neben anderen Auftragsorgantypen abwechselnd angeordnet sind.

Die Erfindung bezieht sich weiterhin auf einen Applikator, insbesondere einen Kosmetikapplikator aufweisend die Applikatoreinrichtung nach der Erfindung. Des Weiteren erstreckt sich die Erfindung auch auf eine Applikationseinheit, insbesondere eine Kosmetikeinheit welche die Applikatoreinrichtung gemäß der Erfindung aufweist.

Im Folgenden wird die Erfindung anhand der Figuren beispielhaft näher erläutert. Es zeigen dabei:
- Figur 1:: eine Seitenansicht auf eine erfindungsgemäße Applikatoreinrichtung;
- Figur 2:: eine erste Ausführungsform eines knickbehafteten Auftragorgans für eine erfindungsgemäße Applikatoreinrichtung, eine vergrößerte Längsschnittdarstellung entlang der Längsache L gemäß Figur 1 eines Auftragsorgans (Schnittebene E);
- Figur 2a:: eine Detailansicht des Details X aus Figur 2;
- Figur 3:: eine weitere Ausführungsform eines knickbehafteten Auftragsorgans für eine Applikatoreinrichtung gemäß der Erfindung;
- Figur 4:: eine weitere Ausführungsform eines knickbehafteten Auftragsorgans für eine Applikatoreinrichtung gemäß der Erfindung;
- Figur 5:: eine weitere Ausführungsform eines knickbehafteten Auftragsorgans für eine Applikatoreinrichtung gemäß der Erfindung;
- Figur 6:: eine weitere Ausführungsform eines knickbehafteten Auftragsorgans für eine Applikatoreinrichtung gemäß der Erfindung;
- Figur 7:: eine weitere Ausführungsform eines knickbehafteten Auftragsorgans für eine Applikatoreinrichtung gemäß der Erfindung;
- Figur 8:: eine weitere Ausführungsform eines knickbehafteten Auftragsorgans für eine Applikatoreinrichtung gemäß der Erfindung;

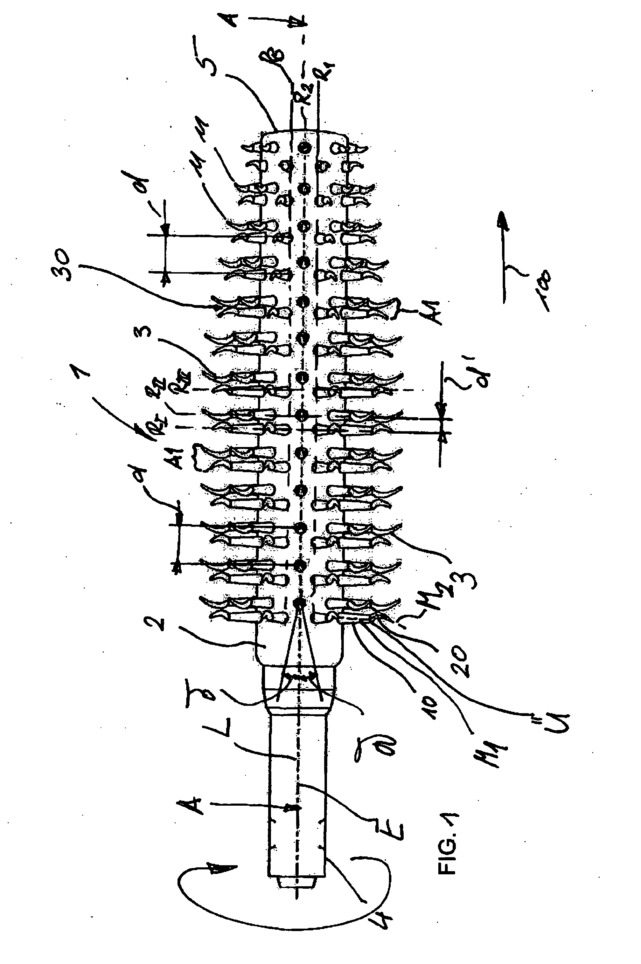

Figur 1 zeigt eine erfindungsgemäße Applikatoreinrichtung 1 mit einem Träger 2. Der Träger 2 weist einen Auftragorganbesatz mit einer Vielzahl von Auftragsorganen 3 auf. Weiterhin besitzt der Träger 2 ein proximales Ende 4 und ein distales Ende 5. Das proximale Ende 4 ist einer Hand der Bedienerin zugewandt und dient beispielsweise zur Anbringung einer Applikatorstange (nicht gezeigt) oder eines Applikatorgriffstücks (nicht gezeigt) für die Applikatoreinrichtung 1.

Das distale Ende 5 ist ein freies Ende. Die Applikatoreinrichtung 1 und der Träger 2 besitzen eine Längsachse L entlang einer Längsrichtung 100. Die Auftragsorgane 3 sind entlang der Längsrichtung 100 in Reihen R1, R2, R3, ..., Rₙ angeordnet. Die Reihen R1, R2, R3, ..., Rₙ verlaufen parallel zur Längsachse L.

Einzelne Auftragsorgane 3 einer Reihe R1, R2, R3, ..., Rₙ weisen zueinander den Abstand d auf. In einer Umfangsrichtung U sind die Auftragsorgane in Reihen (RI, RII, RIII, ..., Rₙ) angeordnet. Benachbarte Auftragsorgane 3 von Reihen RI, RII, RI-II, ..., Rₙ oder von Reihen R1, R2, R3, ..., Rₙ weisen in Längsrichtung 100 gesehen einen Abstand d' auf, wobei der Abstand d' bevorzugt kleiner ist als die Hälfte des Abstands d. In diesem Fall bilden jeweils benachbarte Auftragsorgane 3 zweier benachbarter Reihen R1, R2, R3, ..., Rₙ oder von Reihen RI, RII, RII, ..., Rₙ ein Auftragsorganpaar A1, wobei Auftragorgane 3 der Auftragsorganpaare A1 zueinander jeweils einen kleineren Abstand im Vergleich zu anderen Auftragsorganen 3 aufweisen.

Die Auftragsorgane 3 besitzen einen ersten Abschnitt 10, welcher gegenüber einem zweiten Abschnitt 20 näher am Träger 2 sitzt.

Der Abschnitt 10 besitzt eine Mittellängsachse M1. Der zweite Abschnitt 20 besitzt eine Mittellängsachse M2. Zumindest eine der Mittellängsachsen M2 und/oder M1 besitzt einen gekrümmten Verlauf. Im Ausführungsbeispiel gemäß Figur 1 besitzt der erste Abschnitt 10 einen geraden Verlauf der zugehörigen Mittellängsachse M1, wohingegen der zweite Abschnitt 20 mit seiner Mittellängsachse M2 einen gekrümmten Verlauf besitzt.

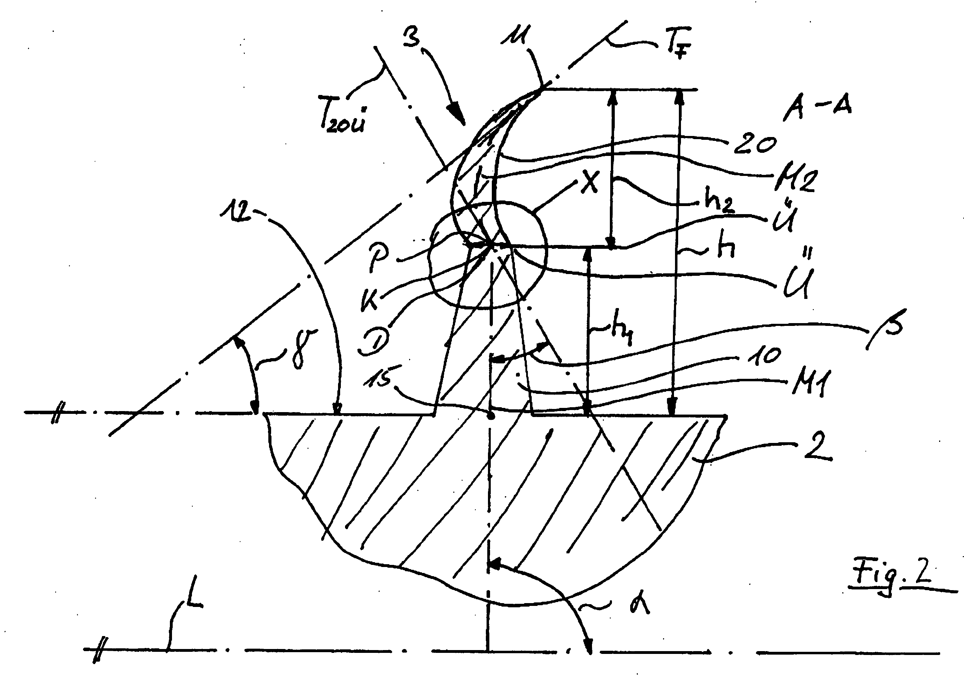

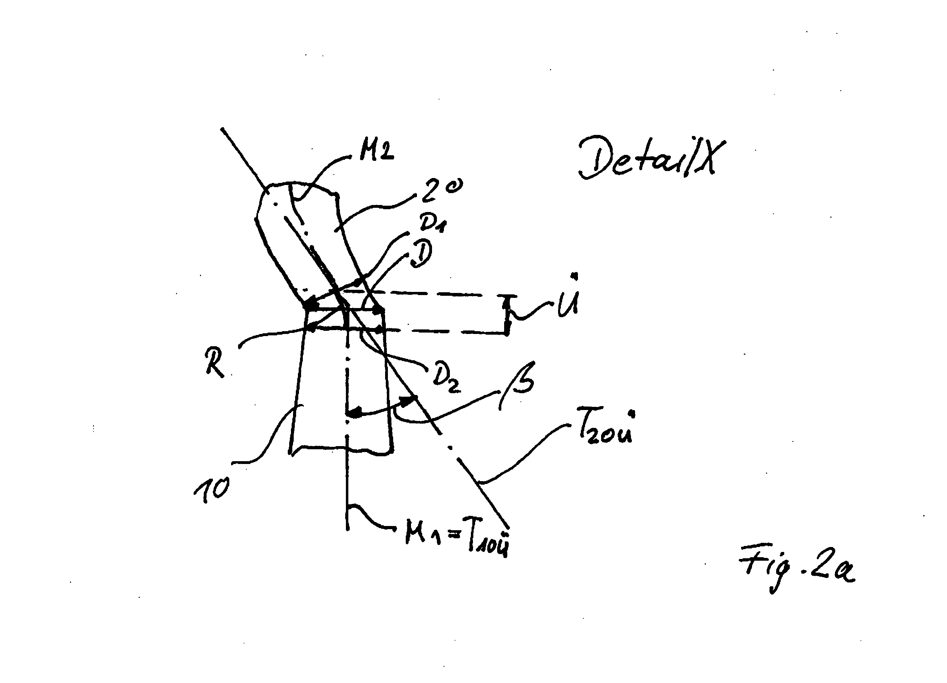

Im Ausführungsbeispiel gemäß Figur 1 treffen sich die Mittellängsachsen M1 und M2 in einer Übergangszone Ü und bilden dort einen Knick K (vgl. hierzu auch Beschreibung weiter unten und Figur 2, 2a).

Im Ausführungsbeispiel gemäß Figur 1 sind jeweils gekrümmte zweite Abschnitte 20 zweier Auftragsorgane 3 eines Auftragsorganpaars A1 mit ihren konvex gekrümmten Außenseiten aufeinander zuweisend ausgerichtet, so dass jeweils ein Auftragsorganpaar A1 eine Art Fangtrichter 30 bildet, in dem beispielsweise mit Mascaramasse zu benetzende Wimpern einer Anwenderin gefangen und besonders wirkungsvoll umfänglich mit Mascaramasse benetzt werden können.

Die Auftragsorgane 3 sind innerhalb jeweils einer der Reihen R1, R2, R3, ..., Rₙ so angeordnet, dass freie Enden 11 der Auftragsorgane 3 einer der Reihen gleichgerichtet in Längsrichtung 100 oder entgegengesetzt zur Längsrichtung 100 weisen. Selbstverständlich ist es auch möglich, die Auftragsorgane 3 einer Reihe R1 oder R2 oder R3 alternierend oder anderweitig abwechselnd entlang der Längsrichtung 100 anzuordnen.

Die Applikatoreinrichtung 1 ist bevorzugt mittels eines Urformverfahrens gemäß DIN 8580 hergestellt. Insbesondere geeignet sind hierfür Kunststoffspritzgussverfahren oder 3D-Druckverfahren, wobei die Applikatoreinrichtung 1 sowohl aus einem einzigen Kunststoffmaterial, wie auch aus mehreren verschiedenen Kunststoffmaterialien beispielsweise im Ein- und/oder Zwei- und/oder Mehrkomponentenspritzgussverfahren hergestellt sein kann.

Ein solches Urformverfahren gemäß DIN 8580, insbesondere ein solches Kunststoffspritzgussverfahren kann dabei so erfolgen, dass in ein und demselben Werkzeug zunächst ein erster Kunststoff und anschließend ein anderer Kunststoff eingespritzt wird, so dass vordefinierte Teilbereiche der Applikatoreinrichtung 1 aus dem ersten und andere vordefinierte Teilbereiche der Applikatoreinrichtung 1 aus einem zweiten oder weiteren Kunststoff ausgebildet werden.

Des Weiteren ist es aber auch möglich zunächst in einem ersten Formwerkzeug einen ersten Teil der Applikatoreinrichtung 1 herzustellen und anschließend im Wege des Anspritzens einen zweiten oder weiteren Teil der Applikatoreinrichtung 1 einstückig an den ersten Teil anzuformen. Beispielsweise können der Träger 2 und jeweils die ersten Abschnitte 10 der Auftragsorgane 3 in einem ersten Spritzgussprozess hergestellt werden und in einem zweiten Spritzgussprozess die zweiten Abschnitte 20 der Auftragsorgane 3 angespritzt werden.

Wesentlich bei der Herstellung im Rahmen eines Urformverfahrens ist, dass die Applikatoreinrichtungen 1 nicht aus verschiedenartig vorgefertigten Teilen zusammenmontiert werden, sowie es beispielsweise bei den im Stand der Technik hinlänglich bekannten Bürsten mit verdrilltem Drahtkern und in diesen eingelegten bzw. eingeklemmten Borsten der Fall ist.

Ziel der Erfindung ist es, Applikatoreinrichtungen 1 anzugeben, die mittels eines Urformverfahrens herstellbar sind und den Randbedingungen solcher Urformverfahren, beispielsweise fertigungstechnische Grenzen des Kunststoffspritzgießens in realisierbarem Maße Rechnung tragen.

Im Folgenden wird anhand der Figur 2 eine mögliche geometrische Raumform der Auftragsorgane 3 anhand eines ausgewählten Ausführungsbeispiels erläutert.

Hierzu ist eine Schnittebene E gewählt, welche einen Schnitt entlang der Linie A-A aus der Figur 1 zeigt. Geschnitten sind hierbei die Auftragsorgane 3, welche in Figur 1 als Mitglieder der Reihe R2 dargestellt sind. Die Schnittebene E (Zeichenebene der Figur 2) ist in diesem dargestellten Ausführungsfall auch eine Mittelebene E' der geschnittenen Auftragsorgane 3. Die Mittelebene E' der Auftragsorgane 3 kann gegenüber der Schnittebene jedoch auch um einen Winkel δ=+/-10° (vgl. Figur 1) zur Schnittebene E geneigt sein. Im Folgenden kommt es jedoch hinsichtlich der weiteren Angaben auf die Projektion in die Schnittebene E gemäß Figur 2 (= deren Zeichenebene) an. Eine mögliche um den Winkel δ = bis zu +/-10° abgewinkelte Anordnung der Mittelebene E' durch die einzelnen Auftragsorgane 3 relativ zur Schnittebene E erscheint spritzgusstechnisch, insbesondere hinsichtlich der hierfür erforderlichen Formwerkzeuge derzeit machbar.

Vom Träger 2 erstreckt sich der erste Abschnitt 10 des Auftragorgans 3 weg. Die Mittellängsachse M1 des ersten Abschnitts 10 hat einen geraden Verlauf und schließt im Ausführungsbeispiel gemäß Figur 2 einen Winkel α von 90° mit der Längsachse L der Applikatoreinrichtung 1 ein. Die Mittellängsachse M1 trifft den Träger 2 in einem Fußpunkt 15 des Auftragsorgans 3. Der erste Abschnitt 10 erstreckt sich über eine Höhe h1 von einer Außenseite 12 des Trägers 2 weg.

Radial sich an den ersten Abschnitt 10 anschließend ist ein zweiter Abschnitt 20 des Auftragsorgans 3 vorhanden, welcher eine gekrümmte Mittellängsachse M2 besitzt.

Der zweite Abschnitt 20 besitzt eine radiale Erstreckung h2. Am freien Ende 11 des Auftragsorgans 3 besitzt die Mittellängsachse M2 eine Tangente T_{F}, welche mit der Längsachse L einen Winkel γ einschließt. Anderendig besitzt die Mittellängsachse M2 eine zur Übergangszone Ü gehörende Tangente T_{20Ü}, welche im Ausführungsbeispiel gemäß Figur 2 mit der Mittellängsachse M1 einen Winkel β einschließt und sich in einem Punkt P scharfkantig mit der Mittellängsachse M1 schneidet. Dieses scharfkantige Schneiden der Tangente T_{20Ü} mit der Mittellängsachse M1 ist u. a. als Knick im Sinne der Erfindung zu verstehen.

Die Mittellängsachsen M2 und M1 treffen sich im dargestellten Ausführungsbeispiel gemäß Figur 2 somit in einem Punkt und bilden in diesem Punkt den Knick K.

Als Knick K im Sinne der Erfindung ist jedoch nicht nur ein absolut scharfkantiges auf theoretischen geometrischen Überlegungen beruhendes Aufeinandertreffen der beiden Mittellängsachsen M1 und M2 zu verstehen. Um die optisch reizvollen und spektakulären Effekte zu erzielen kann der Übergang zwischen den Mittellängsachse M1 und M2 auch einen geringen Übergangsradius aufweisen ohne die optische Wirkung eines Knickes zu verlieren. In diesem Zusammenhang wird auf die nachfolgende Beschreibung im Zusammenhang mit Figur 2a hingewiesen.

Dort ist die Tangente T_{20Ü} sowie die Mittellängsachse M1 und die Mittellängsachse M2 dargestellt. Die Mittellängsachse M1 und die Mittellängsachse M2 sind in der Übergangszone Ü, welche im theoretischen Beispiel gemäß Figur 2 die radiale Erstreckung 0 hat, mittels eines Rundungsradiuses R miteinander verrundet. Damit ein derartiger Übergang der Mittellängsachsen M1 und M2 optisch noch als Knick im Verlauf des Auftragsorgans 3 empfunden wird, ist der Rundungsradius R zwischen den ineinander übergehenden Mittellängsachsen M1 und M2 möglichst nicht größer gewählt, als ein Durchmesser D des Auftragsorgans 3, wobei der Durchmesser D einen Durchmesser des Auftragorgans 3 in der Übergangszone Ü angibt. Der Durchmesser D kann dabei durchaus der größte vorhandene Durchmesser in der Übergangszone Ü des Auftragsorgans 3 sein. Bis zu einem Maß von R≤1,0D erscheint der Übergang des ersten Abschnitts 10 in den zweiten Abschnitt 20 des Auftragorgans 3 optisch als Knick im Sinne der Erfindung. Wird der Rundungsradius R≥1,0D gewählt, so entspricht der optische Eindruck des Auftragorgans 3 in der Übergangszone Ü eher einem gewellten oder sanft geschwungenen Verlauf des Auftragorgans 3, was erfindungsgemäß nicht erreicht werden soll. Zur Veranschaulichung sind in der Figur 2a noch zwei weitere Durchmesser D1 und D2 dargestellt, welche allesamt in der Übergangszone Ü liegen (Definition) und somit als geeignete Ausgangsbasis zur Bestimmung des maximalen Krümmungsradiuses R≤1,0D oder 1,0D1 oder 1,0D2 herangezogen werden können. Die Durchmesser D, D1 und D2 sind dabei jeweils senkrecht zur Mittellängsachse M1 und/oder M2, je nach dem wo sich befinden, zu ermitteln. In der Praxis ergibt eine derartige Ermittlung des Rundungsradiuses R je nach Ausgestaltung der geometrischen Raumform der Auftragsorgane 3, wie sie typischerweise bei Mascaraapplikatoren auftreten, maximal mögliche Rundungsradien im Bereich von 0,2 mm bis 0,8 mm, bei Auftragsorgandurchmessern in der Übergangszone im Bereich von 0,2 mm bis 0,8 mm. Aus der Begrifflichkeit "Durchmesser" folgt nicht, dass es sich zwangsweise um zylindrische Auftragsorgane 3 handeln muss. "Durchmesser" im vorliegenden Sinne ist der maximale Abstand eines Durchstoßpunktes der Mittellängsachsen M1, M2 der Schnittebene E vom weitest entfernten Umrisspunkt des Schnittes durch das Auftragsorgan.

In Abwandlung der Darstellung gemäß Figur 2a ist der Winkel β für den Fall, dass der erste Abschnitt 10 ebenfalls wie der zweite Abschnitt 20 im Ausführungsbeispiel eine gekrümmte Mittellängsachse M1 besitzt als Winkel zwischen den jeweiligen Endtangenten T_{10Ü}, T_{20Ü} der Mittellängsachsen M1, M2, die in der Übergangszone Ü direkt aufeinander treffen oder über einen Radius R miteinander verrundet sind zu verstehen. Im Ausführungsbeispiel gemäß Figur 2a fällt somit die Mittellängsachse M1 des ersten Abschnitts 10 mit der Tangente T_{10Ü} des ersten Abschnitts 10 zusammen.

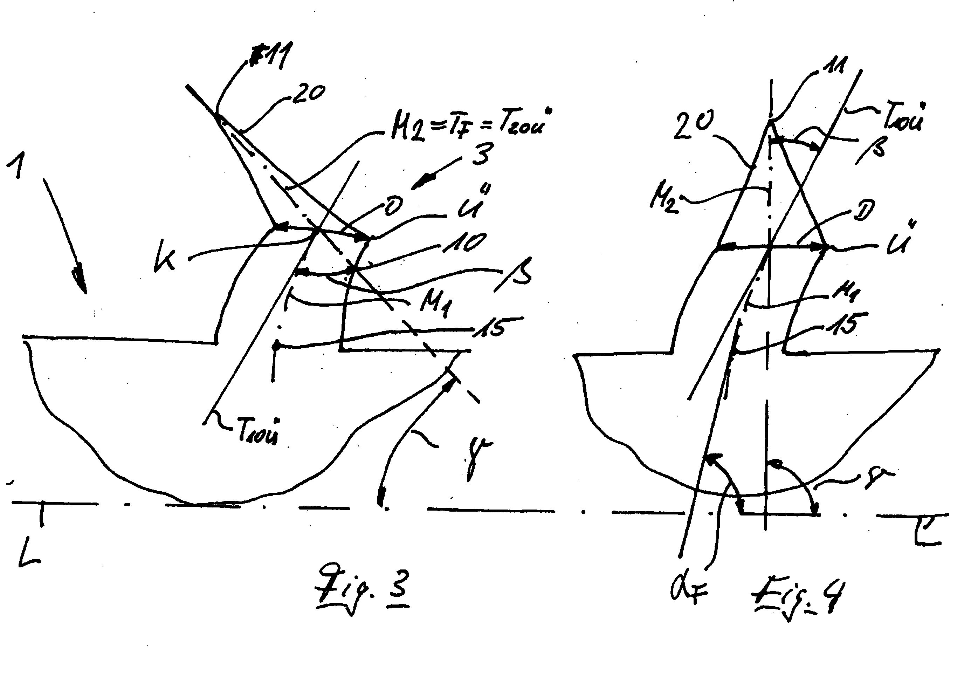

Im Folgenden wird anhand der Figur 3 ein weiteres Ausführungsbeispiel der erfindungsgemäßen Applikatoreinrichtung 1 mit einer besonderen Ausgestaltung des Auftragsorgans 3 erläutert.

Im Unterschied zu den bereits vorbeschriebenen Ausführungsformen ist bei der Ausführungsform des Auftragsorgans 3 gemäß Figur 3 der erste (trägernähere) Abschnitt 10 mit einer gekrümmten Mittellängsachse M1 versehen, wohingegen der zweite (trägerfernere) Abschnitt 20 des Auftragsorgans 3 eine gerade Mittellängsachse M2 besitzt. Die Tangente T_{10Ü} des ersten Abschnitts 10 schließt mit der Mittellängsachse M1 dem Winkel β ein. Die Mittellängsachse M2 (gerade Mittellängsachse) schließt mit der Längsachse L die Applikatoreinrichtung 1 den Winkel γ ein. Im gezeigten Ausführungsbeispiel fällt die Mittellängsachse M2, da sie gerade ist, mit der Tangente T_{F} zusammen. Die Tangente T_{10Ü} bildet zusammen mit der Mittellängsachse M2=T_{F}=T_{20Ü} den Knick K in der Übergangszone Ü.

Bei der Ausführungsform gemäß Figur 4 entspricht der grundsätzliche Aufbau demjenigen der Figur 3, wobei im Unterschied zur Ausführungsform gemäß Figur 3 der Winkel γ 90° beträgt.

Ein weiterer Unterschied bei der Ausführungsform gemäß Figur 4 ist, dass die Mittellängsachse M1 des ersten Abschnitts 10 im Fußpunkt 15 schiefwinklig zur Längsachse L, d. h. mit einem Fußpunktwinkel α_{F}< 90° vom Träger 2 abgeht.

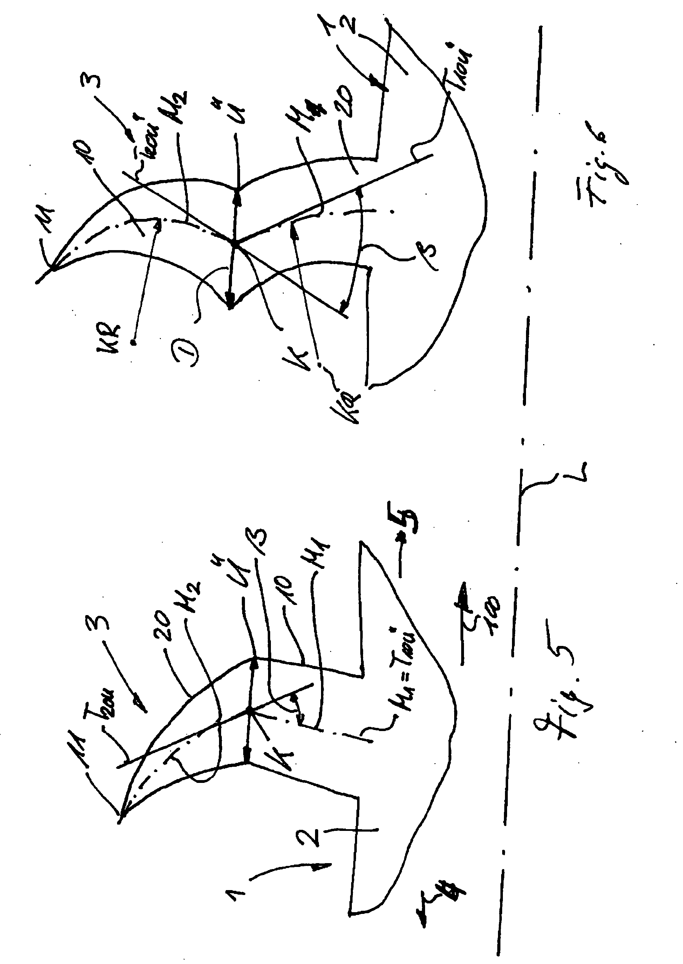

Bei einer Ausführungsform gemäß Figur 5 ist der erste Abschnitt 10 mit einer gerade verlaufenden Mittellängsachse M1 und der zweite Abschnitt 20 mit einer gekrümmt verlaufenden Mittellängsachse M2 ausgebildet. In der Längsrichtung 100 gesehen ist dabei der erste Abschnitt 10 zum freien (distalen) Ende 5 der Applikatoreinrichtung 1 hin geneigt angeordnet, wobei der zweite Abschnitt 20 in die Gegenrichtung geneigt angeordnet ist, so dass das freie Ende 11 des Auftragorgans 3 entgegen der Längsrichtung 100, also zum proximalen Ende 4 hin weist.

In einer Ausführungsform gemäß Figur 6 weisen beide Abschnitte 10 und 20 jeweils eine gekrümmte Mittellängsachse M1 und M2 auf, die in der Übergangszone Ü den Knick K bildend treffen. Beide Mittellängsachsen M1 und M2 weisen dabei gleichartige Krümmungen, d. h. vorzeichengleiche Krümmungen auf. Die Krümmungsmittelpunkte KR dieser Krümmungen liegen jeweils auf einer gemeinsamen Seite des Auftragselements 3.

In der Darstellung gemäß Figur 6 sind diese Krümmungsmittelpunkte schematisch mit KR angedeutet. Eine derartige Anordnung zweier gleichartig gekrümmter Abschnitte 10 und 20 gibt eine optisch besonders auffällige Gestalt des Auftragorgans 3.

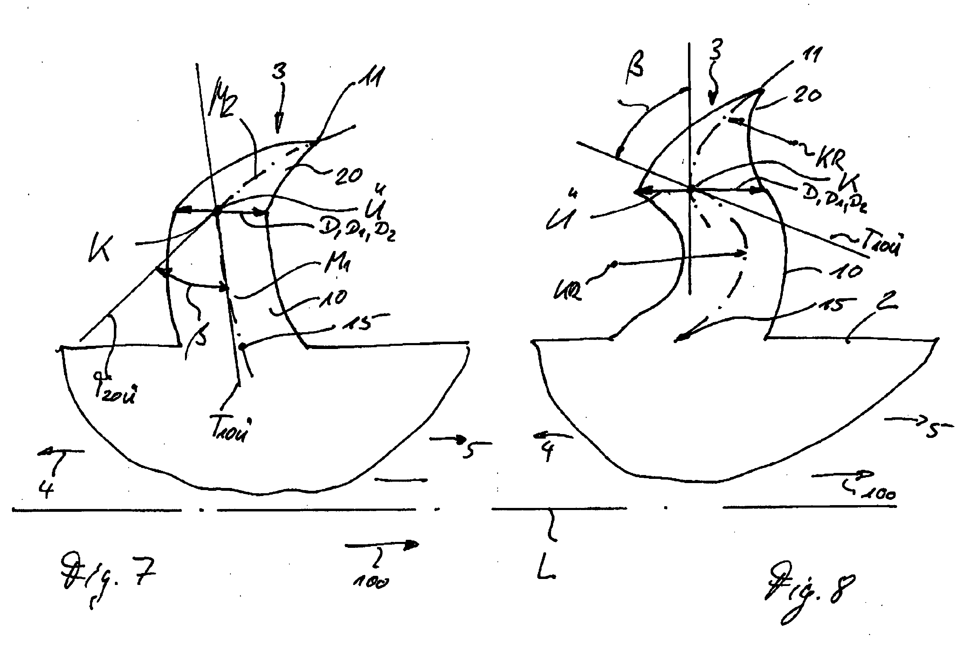

Bei einer weiteren Ausführungsform der erfindungsgemäßen Applikatoreinrichtung 1 gemäß Figur 7 weisen beide Abschnitte 10 und 20 jeweils eine gekrümmte Mittellängsachse M1 und M2 auf, die in der Übergangszone Ü den Knick K bilden.

Bei der Ausführungsform gemäß Figur 7 weist das freie Ende 11 des Auftragsorgans 3 in Längsrichtung 100 zum distalen Ende 5 der Applikatoreinrichtung 1 hin. Selbstverständlich kann die Anordnung des gezeigten Auftragorgans 3 auch gespiegelt erfolgen, so dass das freie Ende 11 zum proximalen Ende 4 der Applikatoreinrichtung 1 hin zeigt.

Die Tangenten T_{10Ü} und T_{20Ü} schließen dabei wiederum den Winkel β ein. Hierdurch wird der Knick K in der Übergangszone Ü gebildet.

Zur weiteren Veranschaulichung wird im Folgenden definiert, was unter den Mittellängsachsen M1 und M2 der Auftragsorgane 3 zu verstehen ist und wie diese im Bedarfsfall ermittelt werden.

Die Mittellängsachsen M1 und M2 werden jeweils durch Flächenschwerpunkte der Schnittflächen durch die Auftragsorgane 3 gebildet, wobei die Schnittflächen der Schnittebene E entlang der gesamten radialen Erstreckung h der Auftragsorgane 3 entlang wandern.

Die Krümmungen der Mittellängsachsen M1 und M2 sind im Ausführungsbeispiel gemäß Figur 7 gleichartig.

Ein Beispiel mit entgegengesetzten Krümmungen der Mittellängsachsen M1 und M2 zeigt die Ausführungsform gemäß Figur 8. Die Krümmungsmittelpunkte KR des ersten Abschnitts 10 und des zweiten Abschnitts 20 (stark schematisiert dargestellt) liegen auf unterschiedlichen Seiten des Auftragsorgans 3.

Aus der Vielzahl der im Einzelnen beschriebenen Ausführungsformen ergibt sich, dass mit der erfindungsgemäßen Lösung eine Vielzahl optisch spektakulär aussehender Auftragsorgangestaltungen realisierbar ist, welche zudem mittels Urformverfahren in besonders präziser Art und Weise wiederholbar und genau herstellbar sind.

Des Weiteren ist von besonderem Vorteil, dass durch die in weiten Grenzen frei wählbare Krümmungsstärke und Krümmungsrichtung der Auftragsorgane in besonderer Art und Weise Mascarareservoire bzw. Mascarareservoirvolumina in der Nähe des Trägers 2 ausgebildet werden können, insbesondere dann, wenn zwei ein Auftragsorganpaar A1 bildende Auftragsorgane 3 mit ihren konkav gewölbten Seiten der trägernäheren Abschnitte 10 aufeinander zuweisen, so dass hier in gewisser Weise ein Umschließen eines Volumens stattfindet, welches besonders geeignet ist, Mascaramasse auch nach einem eventuell erfolgten Abstreifvorgang am Applikator zu halten.

Durch besondere Ausgestaltung insbesondere der trägerferneren Abschnitte 20 beispielsweise - wie vorbeschrieben - durch aufeinander zuweisende konvex gekrümmte Bereiche zweier ein Auftragsorganpaar A1 bildenden Auftragsorgane 3, kann insbesondere sehr wirkungsvoll ein Wimpern klemmender bzw. Wimpern fangender Fangtrichter 30 gebildet werden, der insbesondere für eine in manchen Einsatzgebieten bevorzugte Rundumbenetzung der Wimpern sorgen kann.

Insbesondere wenn die erfindungsgemäße Applikatoreinrichtung 1 aus verschiedenartigen Kunststoffmaterialien hergestellt wird, beispielsweise die Abschnitte 20 weicher ausgebildet werden als die Abschnitte 10 oder umgekehrt, so können hier mit der erfindungsgemäßen Applikatoreinrichtung weitere konstruktive Freiheitsgrade, insbesondere weitere positive Anwendereffekte erzielt werden, die über die spektakuläre optische Erscheinung hinausgehen.

Für alle Ausführungsformen übergreifend soll angemerkt werden, dass es selbstverständlich möglich ist, Auftragsorgangestaltungen nach den beschriebenen und auch nach weiteren zur Erfindung gehörenden Ausführungsformen beliebig miteinander zu kombinieren, so lange fertigungstechnische Grenzen des bevorzugt einzusetzenden Urformverfahrens nicht überschritten werden.

Gleichwohl ist es auch möglich, eine Applikatoreinrichtung 1 herzustellen, die auch Auftragsorgane 3 anderen Typs, beispielsweise Scheiben, Rillen oder Zähne, Zinken oder dergleichen besitzt, die in Kombination mit den knickbehafteten Auftragsorganen 3 gemäß der Erfindung einsetzbar sind.

Auch das distale freie Ende 5 des Trägers 2 kann durchaus einen Auftragsorganbesatz aufweisen, der entweder aus bereits aus dem Stand der Technik bekannten Borsten/Auftragsorganen oder aus Auftragsorganen gemäß der Erfindung, die einen Knick aufweisen, bestehen kann.

Die Erfindung ist selbstverständlich auf Applikatoreinrichtungen mit einer geraden Längsachse L, wie auch auf Applikatoreinrichtungen mit einer ggf. gekrümmten oder anderweitig nicht gerade verlaufenden Längsachse L entsprechend anwendbar. Gegebenenfalls gelten die gemachten Angaben in Relation zur Längsache L dann sinngemäß abschnittsweise oder in Relation zu Tangenten an die Längsache L, welche wiederum eine Übertragung der gemachten Angaben auch auf gekrümmte Längsachsen für den Fachmann ohne Weiteres möglich machen.

Des Weiteren besteht selbstverständlich die Möglichkeit, abgesehen von den beiden explizit beschriebenen Abschnitten 10 und 20 auch noch weitere Abschnitte für Auftragsorgane vorzusehen, für deren Übergang dann die beschriebenen Knicke K und dergleichen ggf. vorgesehen werden können oder nicht. Erfindungsgemäß ist es jedoch wesentlich, dass zumindest ein Knick K bei zumindest einem Auftragsorgan 3 vorhanden ist.

Sämtliche im Zusammenhang mit den Ausführungsformen beschriebenen Auftragsorgane verjüngen sich zu den freien Enden 11 hin. Selbstverständlich liegt es auch im Bereich der Erfindung zylindrische oder anderweitige geometrische strangartige Auftragsorgane zu verwenden, die sich zum freien Ende 11 hin nicht verjüngen, ggf. ja sogar verdicken.

Abschließend sei, losgelöst von den Ausführungsbeispielen festgehalten, dass insbesondere auch für folgende weitere Ausgestaltungsmöglichkeiten der durch die Ansprüche beschriebenen Erfindung Schutz begehrt wird.

Für eine Applikatoreinrichtung, die sich dadurch auszeichnet, dass der erste Abschnitt 10 aus einem ersten Kunststoffmaterial, insbesondere dem Kunststoffmaterial des Trägers 2, ausgebildet ist und der zweite Abschnitt 20 aus einem zweiten Kunststoffmaterial, insbesondere aus einem gegenüber dem ersten Kunststoffmaterial weicheren Kunststoffmaterial ausgebildet ist.

Für eine Applikatoreinrichtung, die sich dadurch auszeichnet, dass die Auftragsorgane 3 entlang der Längsachse L in Reihen R1, R2, R3, ..., Rₙ angeordnet sind und benachbarte Auftragsorgane 3 einer Reihe R1, R2, R3, ..., Rₙ, zueinander einen Abstand d aufweisen.

Für eine Applikatoreinrichtung, die sich dadurch auszeichnet, dass Auftragsorgane 3 benachbarter Reihen R1, R2, R3, ..., Rₙ um einen Betrag d'≤0,5xd in Längsrichtung 100 der Applikatoreinrichtung 1 zueinander versetzt angeordnet sind.

Für eine Applikatoreinrichtung, die sich dadurch auszeichnet, dass zueinander nächstliegende Auftragsorgane 3 benachbarter Reihen R1, R2, R3, ..., Rₙ Auftragsorganpaare A1 bilden, wobei sich die Auftragsorgane 3 des Auftragsorganpaares A1 parallel in einer Seitenansicht senkrecht auf die Längsachse L zumindest teilweise berühren, sich überlappen oder einen geringen Abstand a aufweisen, wobei 0 mm<a≤0,8 mm, insbesondere 0mm<a≤0,3 mm gilt.

Für eine Applikatoreinrichtung, die sich dadurch auszeichnet, dass Auftragsorgane 3 benachbarter Reihen R1, R2, R3, ..., Rₙ hinsichtlich der Richtung, in die die freien Enden 11 der Auftragsorgane 3 bezüglich der Applikatoreinrichtung 1 weisen, entgegengesetzt angeordnet sind.

Für eine Applikatoreinrichtung, die sich dadurch auszeichnet, dass die Mittelachsen M1, M2 des ersten und des zweiten Abschnitts 10, 20 in einer Ebene E' liegen oder eine Ebene E' aufspannen.

Für eine Applikatoreinrichtung, die sich dadurch auszeichnet, dass die Ebene E' parallel oder um einen Winkel δ angewinkelt zur Längsachse L angeordnet ist, wobei gilt 0°≤δ≤10°.

Für eine Applikatoreinrichtung, die sich dadurch auszeichnet, dass Mittelachsen M1, M2 aller Auftragsorgane 3 einer Reihe R1, R2, Rₙ in der Ebene E' liegen.

Für eine Applikatoreinrichtung, die sich dadurch auszeichnet, dass die Auftragsorgane 3 sich zum freien Ende 11 hin verjüngend ausgebildet sind.

Für eine Applikatoreinrichtung, die sich dadurch auszeichnet, dass zu einem distalen Ende 5 der Applikatoreinrichtung 1 hin die Höhe h der Auftragsorgane 3 abnimmt.

Für eine Applikatoreinrichtung, die sich dadurch auszeichnet, dass das Verhältnis h1:h für alle Auftragsorgane 3 einer Applikatoreinrichtung 1 konstant ist.

Für eine Applikatoreinrichtung, die sich dadurch auszeichnet, dass das Verhältnis h1:h zum distalen Ende 5 hin abnimmt.

Für eine Applikatoreinrichtung, die sich dadurch auszeichnet, dass das Verhältnis h1:h über die Längserstreckung der Applikatoreinrichtung 1 entlang der Längsachse L variiert, so dass Auftragsorgane 3 mit einem ersten Verhältnis h1:h und Auftragsorgane 3 mit einem oder mehreren hiervon abweichenden anderen Verhältnis h1:h vorhanden sind.

Für eine Applikatoreinrichtung, die sich dadurch auszeichnet, dass die Applikatoreinrichtung 1 außerdem weitere Auftragsorgane 3 besitzt, welche beispielsweise spitzkegelige oder zylindrische Borsten und/oder Scheiben und/oder Rillen und/oder Scheibensegmente und/oder Zahnsegmente und/oder Zähne und/oder Zinken und/oder dergleichen sind.

Für eine Applikatoreinrichtung, die sich dadurch auszeichnet, dass die Applikatoreinrichtung 1 mittels eines Urformverfahrens, insbesondere im Ein- oder Mehrkomponentenspritzgussverfahren oder im 3D-Druckverfahren hergestellt ist.

Für einen Applikator, insbesondere einen Kosmetikapplikator aufweisend zumindest eine Applikatoreinrichtung 1 und ein Griffstück zur Handhabung der Applikatoreinrichtung 1, der sich dadurch auszeichnet, dass die Applikatoreinrichtung 1 so ausgebildet ist, wie das in einem der die Applikatoreinrichtung betreffenden Ansprüche beschrieben ist.

Für eine Applikationseinheit, insbesondere Kosmetikeinheit aufweisend einen Behälter für Kosmetikum, eine Abstreifereinrichtung 1 und einen Applikator zum Aufnehmen und Auftragen des Kosmetikums, die sich dadurch auszeichnet, dass die Kosmetikeinheit eine Applikatoreinrichtung 1 nach einem der die Applikatoreinrichtung betreffenden Ansprüche aufweist.

### Bezugszeichen:

- 1: Applikatoreinrichtung
- 2: Träger
- 3: Auftragsorganen
- 4: proximales Ende
- 5: distales Ende
- 10: erster Abschnitt
- 11: freies Ende
- 12: Außenseite
- 15: Fußpunkt
- 20: zweiter Abschnitt
- 30: Fangtrichter
- 100: Längsrichtung

- A1: Auftragsorganpaar
- a: Abstand
- D: Durchmesser
- D1: Durchmesser
- D2: Durchmesser
- d: Abstand
- d': Abstand
- E: Schnittebene
- E': Ebene
- h: Höhe
- h1: Höhe
- h2: radiale Erstreckung
- K: Knick
- KR: Krümmungsmittelpunkte
- L: Längsachse
- M1: Mittellängsachse von 10
- M2: Mittellängsachse von 20
- P: Punkt
- R, r: Rundungsradius/Verrundungsradius
- R1, R2, R3, ..., Rₙ: Reihen
- RI, RII, RIII, ..., Rₙ: Reihen
- r T_{F}: Tangente im Fußpunkt
- T_{10Ü}: Endtangente
- T_{20Ü}: Endtangente

- U: Umfangsrichtung
- Ü: Übergangszone
- α: Winkel
- α_{F}: Fußpunktwinkel < 90°
- β: Winkel
- γ: Winkel
- δ: Winkel

## Patentansprüche

1. Applikatoreinrichtung mit einem einen Auftragsorganbesatz aus einer Vielzahl von Auftragsorganen (3) aufweisenden Träger (2), wobei zumindest ein Auftragsorgan (3) entlang seiner Längserstreckung zumindest einen trägernäheren ersten Abschnitt (10) und zumindest einen weiter vom Träger (2) entfernt liegenden zweiten Abschnitt (20) besitzt und ein Abschnitt (10, 20) des Auftragsorgans (3) eine gekrümmt verlaufende Mittellängsachse (M1, M2) hat, **dadurch gekennzeichnet, dass** sich die Mittellängsachsen (M1, M2) oder deren Endtangenten (T10Ü, T20Ü) des ersten und zweiten Abschnitts (10, 20) in einer Übergangszone (Ü) vom ersten zum zweiten Abschnitt in zumindest einer Projektion auf eine Schnittebene (E) durch das Auftragsorgan (3) einen Knick (K) bildend treffen, wobei die Längsachse des ersten Abschnitts (10) einen geraden Verlauf besitzt und einen Winkel α von 90° mit der Mittellängsachse der Applikatoreinrichtung (1) einschließt und der zweite Abschnitt (20) eine stetig in einer Richtung gekrümmte Mittellängsachse aufweist, und wobei die Auftragsorgane in Längsrichtung in ersten Reihen (R1, R2, R3, Rn), die parallel zur Längsachse verlaufen, und in Umfangsrichtung in zweiten Reihen (RI, RII, RIII, ... Rₙ) angeordnet sind, wobei jeweils benachbarte Auftragselemente zweier benachbarter erster Reihen (R1, R2, R3, Rₙ) Auftragsorganpaare (A1) bilden, die jeweils zueinander einen kleineren Abstand aufweisen als zu anderen Auftragsorganpaaren und wobei die gekrümmten zweiten Abschnitte (20) der Auftragsorganpaare mit ihren konvexen Außenseiten aufeinander zuweisend ausgerichtet sind, so dass jeweils ein Auftragsorganpaar einen Fangtrichter bildet, in dem mit Mascaramasse zu benetzende Wimpern einer Anwenderin gefangen werden können, wobei die in radial einwärtiger Richtung gesehen unterhalb des Fangtrichters liegenden ersten Abschnitte (10) des Auftragsorganpaares voneinander beabstandet sind und einen freien Zwischenraum zwischen sich begrenzen.

2. Applikatoreinrichtung nach Anspruch 1, **dadurch gekennzeichnet, dass** der Knick (K) einen maximalen Rundungsradius (R) aufweist, wobei der maximale Rundungsradius (R) im Bereich zwischen 0 < r < D, bevorzugt zwischen 0 < r < 0,5D, besonders bevorzugt zwischen 0 < r < 0,3D liegt und D ein Durchmesser des Auftragsorgans (3) in der übergangszone (Ü) ist.

3. Applikatoreinrichtung nach einem der vorangegangenen Ansprüche, **dadurch gekennzeichnet, dass** die Mittellängsachse (M2) des zweiten Abschnitts (20) im Bereich eines freien Endes (11) des Auftragsorgans (3) einen Winkel γ mit einer Längsachse (L) der Applikatoreinrichtung (1) einschließt, wobei für den Wert des Winkels γ 0 ≤ γ ≤ 90°, insbesondere 15° ≤ γ ≤ 75°, besonders bevorzugt 30° ≤ γ ≤ 60° gilt.

4. Applikatoreinrichtung nach einem der vorangegangenen Ansprüche, **dadurch gekennzeichnet, dass** der erste Abschnitt (10) eine Höhe (h1) besitzt und das ganze Auftragsorgan (3) eine Höhe (h) besitzt, wobei sich der erste Abschnitt (10) des Auftragnorgans (3) um das Maß (h1) vom Träger (2) der Applikatoreinrichtung (1) weg erstreckt, oder wobei sich das Auftragsorgan (3) um das Maß (h) als Ganzes vom Träger (2) der Applikatoreinrichtung (1) weg erstreckt.

5. Applikatoreinrichtung nach einem der vorangegangenen Ansprüche, **dadurch gekennzeichnet, dass** das Verhältnis h1:h im Bereich zwischen 0,1 und 0,9, insbesondere im Bereich zwischen 0,4 und 0,8, besonders bevorzugt im Bereich zwischen 0,3 und 0,6 liegt.

6. Applikatoreinrichtung nach einem der vorangegangene Ansprüche, **dadurch gekennzeichnet, dass** die Mittelachse (M2) des zweiten Abschnitts (10) oder einer Tangente am Fußpunkt (15) der Mittelachse (M2) des zweiten Abschnitts (10) einen Winkel β zu einer Längsachse (L) der Applikatoreinrichtung (1) oder zu einer Außenseite (12) des Trägers (2) aufweist.

7. Applikatoreinrichtung nach Anspruch 6, **dadurch gekennzeichnet, dass** der Winkel β im Bereich zwischen 30° und 90°, insbesondere im Bereich zwischen 45° und 60° liegt.

## Claims

1. An applicator device comprising a carrier (2) having an application organ covering consisting of a plurality of application organs (3), wherein at least one application organ (3) comprises, along its longitudinal extent, at least one first section (10) closer to the carrier and at least one second section (20) more distant from the carrier (2), and at least one section (10, 20) of the application organ (3) has a curved central longitudinal axis (M1, M2), **characterised in that** the central longitudinal axes (M1, M2) or their end tangents (T10Ü, T20Ü) of the first and second sections (10, 20), in a transitional zone (Ü) from the first to the second section, converge in at least one projection onto a sectional plane (E) through the application organ (3) so as to form a bend (K), wherein the longitudinal axis of the first section (10) has a straight profile and includes an angle α of 90° with the central longitudinal axis of the applicator device 1 and the second section (20) has a central longitudinal axis curved steadily in one direction, and wherein the application organs extend in the longitudinal direction in first rows (R1, R2, R3, ..., Rₙ) extending parallel to the longitudinal axis, and are disposed in second rows (RI, RII, RII ..., Rₙ) in the circumferential direction, wherein respectively adjacent application elements of two adjacent first rows (R1, R2, R3, ..., Rₙ) form application organ pairs (A1) that respectively have a smaller distance from each other than to other application organs, and wherein the curved second sections (20) of the application organ pairs are oriented so as to point towards each other with their convexly curved outer faces, so that one application organ pair respectively forms a capturing funnel in which eyelashes of a user can be captured that are to be wetted with mascara mass, wherein the first sections (10) of the application organ pair that, viewed in a radially inward direction, are situated underneath the capturing funnel are spaced from each other and delimit between them a free intermediate space.

2. The applicator device according to claim 1, **characterised in that** the bend (K) has a maximum rounded-portion radius (R), with the maximum rounded-portion radius (R) being in the range of 0<r<D, preferably 0<r<0.5 D, particularly preferably 0<r<0.3D, and D being a diameter of the application organ (3) in the transitional zone (Ü).

3. The applicator device according to any one of the preceding claims, **characterised in that** the central longitudinal axis (M2) of the second section (20), in the area of a free end (11) of the application organ (3), includes an angle γ with the longitudinal axis (L) of the applicator device (1), with the following being applicable for the value of the angle γ: 0≤γ≤0°, in particular 15°≤γ≤5°, particularly preferably 30°≤γ≤60°.

4. The applicator device according to any one of the preceding claims, **characterised in that** the first section (10) has a height (h1) and the entire application organ (3) has a height (h), wherein the first section (10) of the application organ (3) protrudes from the carrier (2) of the applicator device (1) by the extent (h1), or wherein the application organ (3) protrudes from the carrier (2) of the applicator device (1) as a whole by the extent (h).

5. The applicator device according to any one of the preceding claims, **characterised in that** the ratio h1:h is in a range of 0.1 to 0.9, in particular in the range of 0.4 to 0.8, particularly preferably in the range of 0.3 to 0.6.

6. The applicator device according to any one of the preceding claims, **characterised in that** the central axis (M2) of the second section (10) or a tangent at the base point (15) of the central axis (M2) of the second section (10) has an angle β to a longitudinal axis (L) of the applicator device (1) or to an outer face (12) of the carrier (2).

7. The applicator device according to claim 6, **characterised in that** the angle β is in a range of between 30° and 90°, in particular in a range of between 45° and 60°.

## Revendications

1. Système applicateur comprenant un support (2) comportant une garniture d'organes applicateurs constituée d'une pluralité d'organes applicateurs (3), dans lequel au moins un organe applicateur (3) possède, le long de son extension longitudinale, au moins un premier tronçon (10) proche du support et au moins un second tronçon (20) situé plus éloigné du support (2), et un tronçon (10, 20) de l'organe applicateur (3) possède un axe longitudinal médian (M1, M2) s'étendant de manière incurvée, **caractérisé en ce que** les axes longitudinaux médians (M1, M2) ou leurs tangentes terminales (T10U, T20U) du premier et du second tronçon (10, 20) se rencontrent en formant un coude (K) dans une zone de transition (E) du premier au second tronçon dans au moins une projection sur un plan de coupe (E) à travers l'organe applicateur (3), et l'axe longitudinal du premier tronçon (10) possède un tracé rectiligne et forme un angle α de 90° avec l'axe longitudinal médian du système applicateur (1), et le second tronçon (20) comporte un axe longitudinal médian incurvé constamment dans une direction, et dans lequel les organes applicateurs sont agencés en direction longitudinale en premières rangées (R1, R2, R3, Rn), qui s'étendent parallèlement à l'axe longitudinal, et sont agencés en direction périphérique en secondes rangées (RI, RII, RIII,..., Rn), de sorte que des éléments applicateurs respectivement voisins de deux premières rangées voisines (R1, R2, R3, Rn) forment des paires d'organes applicateurs (A1) qui présentent respectivement les unes par rapport aux autres une distance plus petite que par rapport à d'autres paires d'organes applicateurs, et dans lequel les seconds tronçons incurvés (20) des paires d'organes applicateurs sont orientés de manière que leurs faces extérieures convexes sont tournées l'une vers l'autre, de sorte qu'une paire d'organes applicateurs respective forme un entonnoir récepteur dans lequel les cils d'une utilisatrice qu'il s'agit d'humecter avec une masse de mascara peuvent être reçus, et les premiers tronçons (10), situés au-dessous de l'entonnoir récepteur, vus en direction radiale vers l'intérieur, de la paire d'organes applicateurs sont écartés l'un de l'autre et délimitent entre eux un intervalle libre.

2. Système applicateur selon la revendication 1, **caractérisé en ce que** le coude (K) présente un rayon de courbure maximum (R), tel que le rayon de courbure maximum (R) est dans la plage entre 0 < r < D, de préférence entre 0 < r < 0,5D, de manière particulièrement préférée entre 0 < r < 0,3D, et D est un diamètre de l'organe applicateur (3) dans la zone de transition (U).

3. Système applicateur selon l'une des revendications précédentes, **caractérisé en ce que** l'axe longitudinal médian (M2) du second tronçon (20) définit, dans la région d'une extrémité libre (11) de l'organe applicateur (3), un angle γ avec un axe longitudinal (L) du système applicateur (1), et la valeur de l'angle γ est telle que 0 **≤** γ ≤90°, en particulier 15° ≤ γ ≤ 75 °, et de façon particulièrement préférée 30° ≤ γ ≤ 60°.

4. Système applicateur selon l'une des revendications précédentes, **caractérisé en ce que** le premier tronçon (10) possède une hauteur (h1) et l'organe applicateur entier (3) possède une hauteur (h), telles que le premier tronçon (10) de l'organe applicateur (3) s'étend de la distance (h1) en éloignement du support (2) du système applicateur (1), et l'organe applicateur (3) s'étend de la distance (h) en entier en éloignement du support (2) du système applicateur (1).

5. Système applicateur selon l'une des revendications précédentes, **caractérisé en ce que** le rapport h1:h tombe dans la plage entre 0,1 et 0,9, en particulier dans la plage entre 0,4 et 0,8, de manière particulièrement préférée dans la plage entre 0,3 et 0,6.

6. Système applicateur selon l'une des revendications précédentes, **caractérisé en ce que** l'axe médian (M2) du second tronçon (10) ou d'une tangente au point (15) au pied de l'axe médian (M2) du second tronçon (10) présente un angle β par rapport à un axe longitudinal (L) du système applicateur (1) ou par rapport à une face extérieure (12) du support (2).

7. Système applicateur selon la revendication 6, **caractérisé en ce que** l'angle β tombe dans la plage entre 30° et 90°, en particulier dans la plage entre 45° et 60°.
